Europäisches Patentamt

European Patent Office

Office européen des brevets

(19)

(11) Publication number: **0 517 046 A1**

## EUROPEAN PATENT APPLICATION

(12)

(21) Application number: **92108666.6**

(22) Date of filing: **22.05.92**

(51) Int. Cl.⁵: **F25D 17/04**, F25D 23/02, A23B 7/148, A23L 3/3418, B65D 88/74, B65D 90/00

(30) Priority: **07.06.91 IT MI911588**

(43) Date of publication of application:
**09.12.92 Bulletin 92/50**

(84) Designated Contracting States:
**AT BE CH DE DK ES FR GB GR LI LU NL SE**

(71) Applicant: **ISOLCELL ITALIA S.P.A.**
**Via Antonio Meucci 7**
**I-39055 Laives (BZ)(IT)**

(72) Inventor: **Pruneri, Dario**
**Via Cologna 1/a**

**I-39100 Bolzano(IT)**
Inventor: **Villa, Ivano**
**Via Guncina 1/d**
**I-39100 Bolzano(IT)**
Inventor: **Nardin, Karl**
**Via Monticolo 10**
**I-39057 Appiano (Bolzano)(IT)**

(74) Representative: **Forattini, Amelia et al**
**c/o Internazionale Brevetti Ingg. ZINI,**
**MARANESI & C. S.r.l. Piazza Castello 1**
**I-20121 Milano(IT)**

(54) **Container with refrigeration unit and controlled-atmosphere apparatus.**

(57) The present invention relates to a container hav- ing a refrigeration unit and a controlled-atmosphere apparatus (19-24) for feeding into the container a mixture of nitrogen and oxygen in percentages which vary depending on the product being transported. The container comprises a removable sheet (25) which is substantially impermeable to gases and is arranged inside the container so as to seal the loading and unloading aperture. The invention allows to use a standard refrigerator container.

Fig. 2

EP 0 517 046 A1

Rank Xerox (UK) Business Services

The present invention relates to a container suitable to be transported on container-carrying vehicles and having a refrigeration unit and a controlled-atmosphere apparatus for introducing in the container a mixture of nitrogen and oxygen in percentages which can vary depending on the product being transported. As regards the controlled-atmosphere apparatus, reference is made, for all the details, to the description given in Italian patent application No. 22129 A/88 in the name of this same Applicant.

These known types of container require a particular structure, because it is necessary to provide a special refrigeration unit together with the controlled-atmosphere apparatus. The closure members of the container are generally constituted by two large doors and must be constructed with special characteristics, for ensuring a sufficient seal in order to maintain the controlled atmosphere inside the container. All this entails considerable cost increases, and the purchasers of the containers are reluctant to use special refrigeration units, due to problems of maintenance and spare parts with poor compatibility with standard refrigeration units.

The aim of the present invention is therefore to solve the above problems by providing a refrigerator container with controlled-atmosphere apparatus which can use standard refrigeration units without thereby entailing an increase in space occupation inside the container and thus a decrease in the useful space for loading goods.

Another object of the invention is to reduce costs by providing a refrigerator container in controlled atmosphere which can be manufactured in a highly simplified manner.

Another object of the invention is to allow the use of a standard refrigerator container body.

Another object of the invention is to provide a controlled-atmosphere refrigerator container which is reliable over time even during long transfers by ship or with other means.

This aim, these objects and others are achieved by the refrigerator container according to the invention, with a refrigeration unit and with a controlled-atmosphere apparatus for introducing, in said container, a mixture of nitrogen and oxygen in percentages which can vary depending on the product being transported, characterized in that it comprises a removable sheet, said sheet being substantially impermeable to gases and being arranged inside said container so as to seal the aperture for loading and unloading said container.

The seal obtained in this manner is sufficient to ensure the maintenance of a controlled atmosphere inside the container.

Further characteristics and advantages of the invention will become apparent from the description of a preferred but not exclusive embodiment of the container according to the invention, illustrated only by way of non-limitative example in the accompanying drawings, wherein:

Figure 1 is a rear view of the container according to the invention, with the closure members in the open position;

Figure 2 is a partially sectional side view of the container of Figure 1, with the closure members in the closed position;

Figure 3 is an enlarged-scale rear view of the sheet of Figure 1;

Figure 4 is a sectional view, taken along the plane 4-4 of Figure 3;

Figure 5 is a sectional enlarged view of a detail of the device for supporting the sheet from the ceiling of the container;

Figure 6 is a sectional enlarged view of a detail of Figure 4;

Figure 7 is a partially sectional top view of the container of Figure 1;

Figure 8 is a schematic view of the apparatus for producing the controlled atmosphere;

Figure 9 is a rear view of the front part of the container of Figure 1 viewed from the inside; and

Figure 10 is an enlarged view of a detail of a second embodiment of the supporting means of the sheet according to the invention.

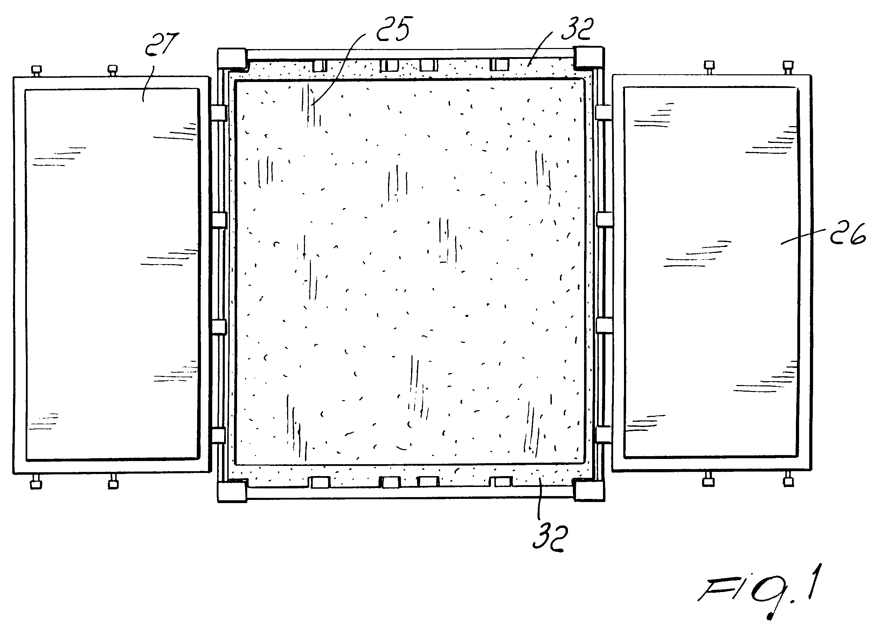

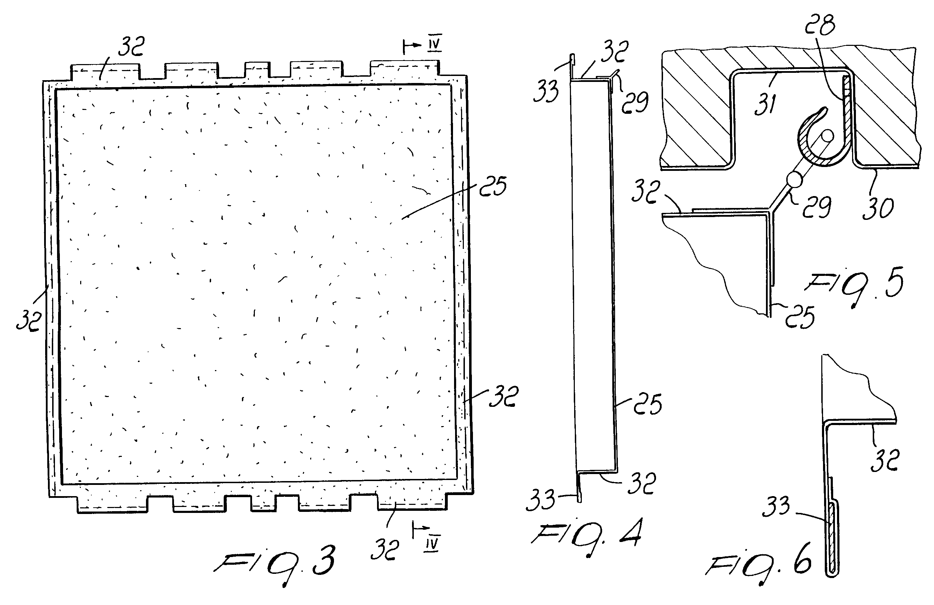

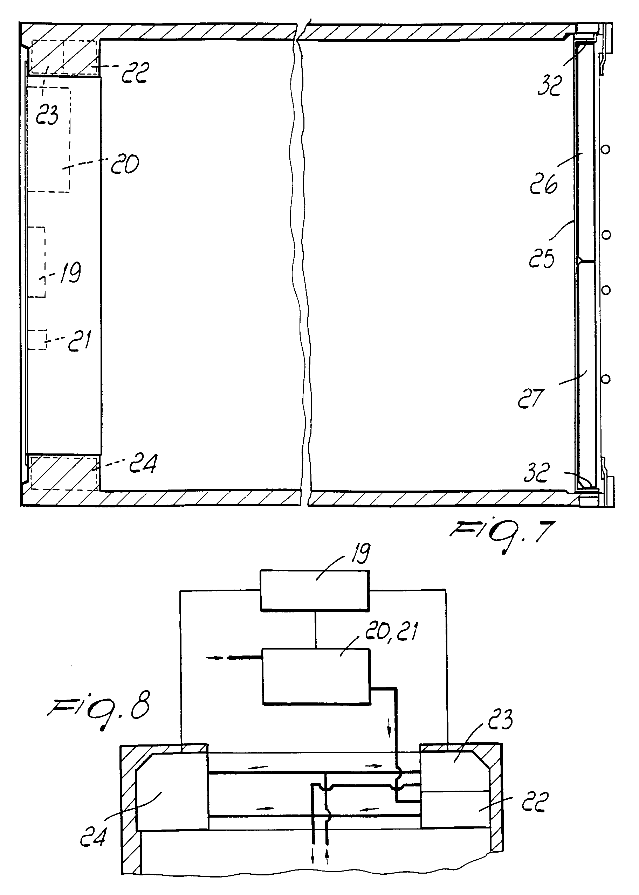

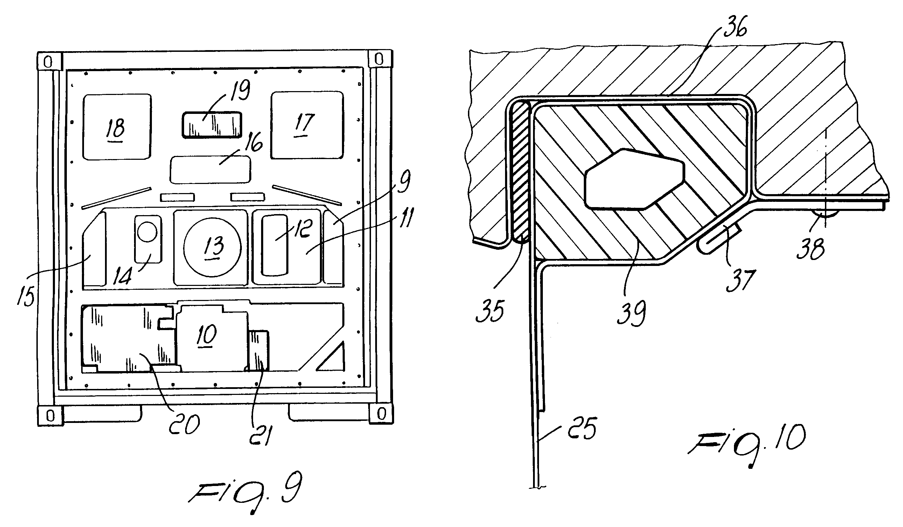

With reference to Figures 1 to 10, the container according to the invention is provided with a standard refrigeration unit 9-18 comprising a door 9 for access to the master electric switch, a partially-sealed refrigerating compressor 10, a door 11 for closing the compartment of the electric panel, a transparent window 12 for a visual inspection of some recording elements, an axial fan 13 for cooling the condenser, a visual thermograph 14 for controlling and recording the internal temperature of the container, a shutter 15 for adjusting the possible introduction of external air, a door 16 for inspecting the lower part of the evaporator, and doors 17 and 18 for inspection and maintenance of the two axial fans for circulating the air of the container.

The controlled-atmosphere apparatus comprises an electronic control unit 19 for controlling and operating the apparatus, an air compressor 20, which preferably operates at a pressure of 7-10 bar, a filter set 21 for separating water and oil from the compressed air, a seat 22 for the compressor for producing nitrogen, a seat 23 for the carbon dioxide cleaning unit, and a seat 24 for the ethylene cleaning unit. According to the selected controlled-atmosphere program the electronic control unit 19 starts the nitrogen generating compressor, the carbon dioxide cleaning unit and the ethylene cleaning unit. These two last units recycle the air of the container in a closed cycle, as shown in particular in Figure 8. It should be noted, in particular, that the seat 22 of the separator for producing nitrogen and the seat 23 for the carbon dioxide cleaning unit are arranged to the side of the refrigeration unit along the right front vertical edge of the container, and similarly the seat 24 of the ethylene cleaning unit is arranged along the left front vertical edge.

The seat of the compressor 20 is defined within the structure of the standard refrigeration unit. Similarly, the set of filters 21 for separating water and oil from the compressed air is accommodated in the structure of the standard refrigeration unit.

In this manner, the size of the refrigeration unit and of controlled-atmosphere apparatus assembly is not greater than the standard refrigeration unit alone, and therefore the entire availability of space for goods of a standard refrigerator container remains unchanged.

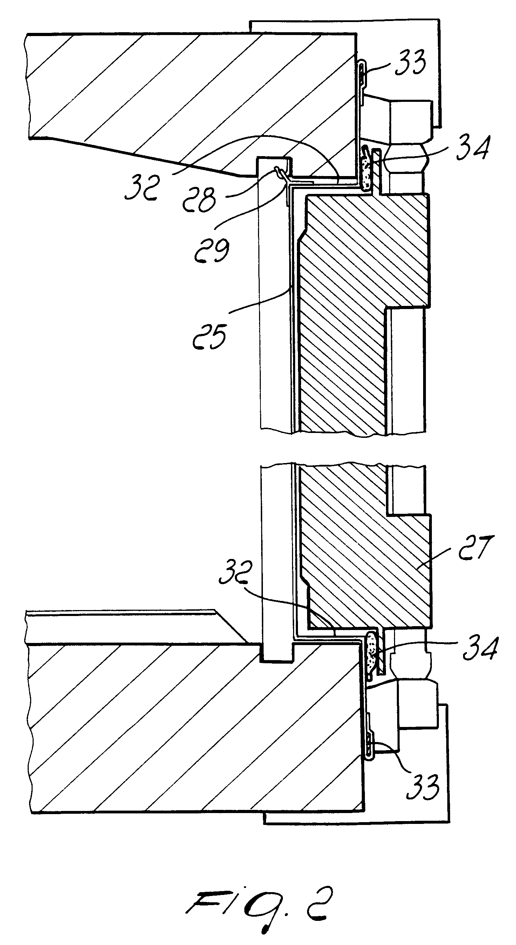

With particular reference to Figures 1 to 6, a sheet 25 is provided which is substantially impermeable to gases and is made for example of fabric-finish PVC. The sheet 25 can be removed, in that it can be raised or extracted completely, so as to allow loading and unloading of the goods. The sheet 25 is arranged inside the container, directly behind the closure members of the container, which are formed, with particular reference to Figures 1 and 2, by the doors 26 and 27. In this manner, the sheet 25 allows to seal the loading and unloading aperture of the container enough to maintain the controlled atmosphere.

Supporting means 28 and 29 are provided in order to removably support the fabric 25 from the ceiling 30 of the container.

Said supporting means preferably comprise coupling elements 28 which are fastened to the ceiling 30 of the container and are suitable to engage complementary elements 29 arranged on the sheet 25. Preferably, the coupling elements 28 are arranged at a recess 31 on the ceiling of the container.

Sealing means are furthermore provided for sealing the edge of the sheet 25 around the opening of the container. Preferably, said sealing means comprise an extension 32 of the edge of the sheet 25. The extension 32 protrudes from the opening of the container and is engaged by the closure elements 26 and 27 of the container, thus providing the seal.

Preferably, the ends of the edges of said extension 32 have magnets 33 so as to cling to the opening of the container, which is made of a ferrous material. With this last solution, closure of the doors 26 and 27 is easier, since the magnets keep the ends of the extensions 32 of the sheet 25 in place during the closure operations.

The sealing means furthermore preferably comprise a gasket 34 made of elastomeric material and arranged at the closure members 26 and 27, so that upon closure said gasket 34 presses against the extensions 32 of the sheet 25 to ensure perfect adhesion and a good seal.

In this manner, the sheet 25 and its extensions 32 form a sort of "tank" which adheres completely to the opening of the container. This solution is particularly simple in assembly and adapts perfectly to standard containers without requiring extensive structural modifications.

According to another embodiment of the means for supporting and sealing the sheet 25, which is described in particular with reference to Figure 10, the sealing means comprise a gasket 35 made of elastomer material to be inserted in a slot 36 defined on the ceiling 30 of the container. In this case, the supporting means are defined by the coupling elements 37, which are fastened to the ceiling of the container by means of the element 38 and engage the complementary elements 39 which form a protrusion on the terminal edge of the sheet 25.

The container according to the invention is susceptible to numerous modifications and variations, and the supporting and sealing means can also be provided by means of other mechanically equivalent solutions.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

**Claims**

1. Container with a refrigeration unit (9-18) and with a controlled-atmosphere apparatus (19-24) for introducing a mixture of nitrogen and oxygen in percentages which can vary depending on the product being transported, in said containers, characterized in that it comprises a removable sheet (25), said sheet being substantially impermeable to gases and being arranged inside said container so as to seal the aperture for loading and unloading said container.

2. Container according to claim 1, characterized in that it comprises supporting means (28, 29) for removably supporting said sheet (25) from the ceiling (30) of said container.

3. Container according to one or more of the preceding claims, characterized in that it comprises sealing means (32) for sealing the edge of said sheet around said aperture of said container.

4. Container according to one or more of the preceding claims, characterized in that said supporting means comprise coupling elements (28) fastened to the ceiling (30) of said container and adapted to engage complementary elements (29) arranged on said sheet (25).

5. Container according to one or more of the preceding claims, characterized in that said coupling elements (28) are arranged at a recess (31) formed on the ceiling (30) of said container.

6. Container according to one or more of the preceding claims, characterized in that said sealing means comprise an extension (32) of the edge of said sheet (25), said extension protruding from said aperture of said container, said extension being engaged by the closure members (26, 27) of said container, providing a seal.

7. Container according to one or more of the preceding claims, characterized in that the edges of said extension have magnets (33) in order to cling to said aperture.

8. Container according to one or more of the preceding claims, characterized in that said sealing means comprise a gasket (35) made of elastomer material to be inserted in a slot (36) formed in the ceiling (30) of said container.

9. Container according to one or more of the preceding claims, characterized in that some of the devices for maintaining the controlled atmosphere are arranged to the side of said refrigeration unit, along the front vertical edges of said container.

Fig.1

Fig. 2

FIG. 3

FIG. 4

FIG. 5

FIG. 6

EP 0 517 046 A1

22

23

20

19

21

24

32

26

25

27

32

Fig. 7

19

20, 21

Fig. 8

23

22

24

Fig. 9

Fig. 10

EP 0 517 046 A1

European Patent Office

**EUROPEAN SEARCH REPORT**

Application Number

EP     92 10 8666

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X<br>Y | EP-A-0 368 678 (TRANSPHERE SYSTEMS)<br>* column 6, line 56 - column 7; claim 1; figure 1 * | 1<br>2-4 | F25D17/04<br>F25D23/02<br>A23B7/148<br>A23L3/3418 |
| Y | DE-A-3 334 145 (LANGSDORF)<br>* page 5, line 20 - page 7; figure 2 * | 3 | B65D88/74<br>B65D90/00 |
| Y | US-A-2 127 379 (ADAMS)<br>* page 2, left column, line 54 - line 68; figure 2 * | 2,4 | |
| X | EP-A-0 136 042 (THE SHIPPING COMPANY OF NEW ZEALAND)<br>* page 11, line 5 - line 14; figure 1 * | 1 | |
| A | US-A-3 868 042 (BODENHEIMER)<br>* column 6, line 4 - line 24; figures 1,6,7 * | 1-4 | |
| | | | **TECHNICAL FIELDS SEARCHED (Int. Cl.5 )**<br><br>F25D<br>B65D<br>A23B<br>A23L |

The present search report has been drawn up for all claims

| Place of search | Date of completion of the search | Examiner |
|---|---|---|
| THE HAGUE | 18 SEPTEMBER 1992 | BAECKLUND O.A. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)